# EUROPÄISCHE PATENTSCHRIFT

(11) **EP 0 418 875 B1**
(45) Veröffentlichungstag und Bekanntmachung des Hinweises auf die Patenterteilung: **01.06.1994**
(21) Anmeldenummer: 90118054.7
(22) Anmeldetag: 19.09.1990
(51) Int. Cl.: F16C 29/06

(54) **Linearführung Stichwort: Schienenführung mit Aufsetzaussparungen**
Linear guiding device with mounting recesses
Guidage linéaire avec des évidements pour l'assemblage

(30) Priorität: 20.09.1989 DE 3931396
(43) Veröffentlichungstag der Anmeldung: 27.03.1991
(73) Patentinhaber: Deutsche Star GmbH, 97424 Schweinfurt (DE)
(72) Erfinder: Neubauer, Gerhard, D-8729 Königsberg (DE); Binder, Manfred, D-8720 Schweinfurt (DE)
(74) Vertreter: Weickmann, Heinrich, Dipl.-Ing.

(56) Entgegenhaltungen:
- DE-A- 3 313 128
- DE-A- 3 527 886
- FR-A- 1 397 873
- US-A- 4 348 063

## Beschreibung

Die Erfindung betrifft eine Linearführung, umfassend eine Führungsschiene mit einer Basisfläche, Seitenflächen und einer Kopffläche und ferner umfassend einen Führungswagen mit einem die Kopffläche überquerender Stegteil und den Seitenflächen gegenüberstehenden Schenkelr sowie Führungsmitteln zwischen dem Führungswagen und der Führungsschiene, wobei diese Führungsmittel mindestens einen Wälzkörperumlauf umfassen und eine lastübertragende Wälzkörperreihe dieses Wälzkörperumlaufs zwischen einer lastaufnehmenden Laufbahn eines Schenkels und einer lastaufnehmenden Laufbahn einer Seitenfläche angeordnet und an der lastaufnehmenden Laufbahn eines der Schenkel gesichert ist, und wobei an dieser einen Seitenfläche zwischen der lastübertragenden Wälzkörperreihe und der Kopffläche eine die lastübertragende Wälzkörperreihe übergreifende Profilschicht der Führungsschiene vorgesehen ist, welche ein Abheben des Führungswagens von der Führungsschiene verhindert.

Linearführungen der obenbezeichneten Art sind bekannt (z.B. DE-A-35 27 886). Dabei besteht jedoch der Nachteil, daß die Führungswagen jeweils an einem axialen Ende auf die Führungsschiene aufgeschoben werden müssen. Dies ist aber nur möglich, wenn der jeweilige Führungswagen zuvor genau fluchtend zu der jeweiligen Führungsschiene ausgerichtet worden ist. Das Ausrichten ist schwierig, besonders, wenn der Führungswagen bzw. die auf ihm angebrachten Anbauteile sehr schwer sind, insbesondere, wenn mehrere Führungswagen mit einer Tischplatte verschraubt sind. In diesem Fall besteht die Gefahr einer Verkantung beim Aufschieben auf die Führungsschiene. Bei einer solchen Verkantung kann ein die Wälzkörper an dem Führungswagen haltender Käfig beschädigt werden, oder es können die Wälzkörper aus diesem Käfig herausgedrückt werden mit der Folge, daß der Wälzkörperablauf gestört und die Lebensdauer herabgesetzt wird und gegebenenfalls der Führungswagen funktionsuntüchtig wird. Häufig sind die Führungswagen mit Dichtlippen versehen, die die Wälzkörper aufnehmenden Zwischenräume zwischen dem Führungswagen und der Führungsschiene gegen Eindringen von Schmutz schützen sollen. In diesem Fall besteht bei der Montage weiterhin die Gefahr einer Verdrückung der Dichtlippen mit der Folge, daß dann Schmutz über die Dichtlippen hinweg eindringen kann. Besonders schwierig wird das herkömmliche Aufbringen der Führungswagen auf die Führungsschiene dann, wenn in den Führungsmitteln und insbesondere in der lastübertragenden Wälzkörperreihe des Wälzkörperumlaufs eine Vorspannung vorgesehen ist, wie man sie häufig vorsieht, um eine spielfreie Lagerung und hohe Steifigkeit zu erreichen. Insbesondere dann, wenn diese Vorspannung durch das Aufbringen des Führungswagens auf die Führungsschiene bei entsprechender Dimensionierung des Führungsbahnabstands und der Wälzkörper eingebracht werden soll, wird die Montage sehr erschwert.

Aus der DE-A-33 13 128 ist bereits ein Führungswagen bekannt, der im demontierten Zustand von oben auf die Führungsschiene aufgesetzt werden kann. Anschließend werden dann Wälzlagereinsätze von der Stirnseite her in den Führungswagen eingeschoben. Dies hat den Nachteil, daß zumindest ein Wälzlagereinsatz mit hohem Druck eingeschoben werden muß, da zwischen den Wälzlagereinsätzen der Führungsschiene und dem Führungswagen kein Spiel vorhanden sein darf.

Der Erfindung liegt die Aufgabe zugrunde, eine Linearführung der eingangs bezeichneten Art so auszubilden, daß der Führungswagen in vereinfachter Weise auf die Führungsschiene aufgebracht werden kann, insbesondere auch dann, wenn im Bereich der tragenden Wälzkörperreihe eine Vorspannung wirksam ist. Zur Lösung dieser Aufgabe wird erfindungsgemäß vorgeschlagen, daß auf einem Teilbereich der Schienenlänge die Profilschicht ausgespart ist derart, daß bei Überlappung des Führungswagens mit diesem Teilbereich der Führungswagen von der Führungsschiene abhebbar sowie auf die Führungsschiene aufsetzbar ist, und daß die Führungsmittel derart ausgebildet sind, daß beim Aufsetzen des Führungswagens die lastübertragende Wälzkörperreihe in Achsflucht zu der lastaufnehmenden Laufbahn der Führungsschiene tritt.

Der Erfindungsvorschlag ist insbesondere dann anwendbar, wenn die lastaufnehmende Laufbahn der Führungsschiene an einer der Basisfläche zugekehrten Begrenzungsflanke der Profilschicht angeordnet ist.

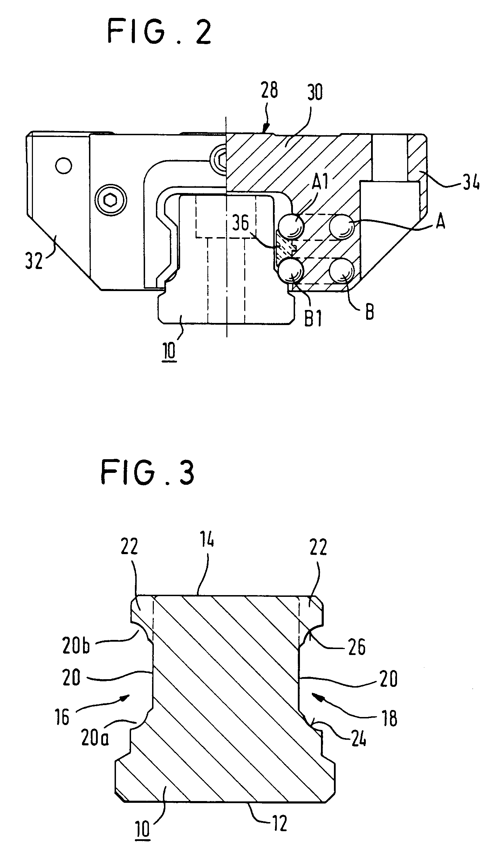

Eine in der Praxis bewährte Ausführungsform einer Linearführung ist aus der DE-A-35 27 886 bekannt. Auf diese DE-A wird wegen weiterer Einzelheiten einer Linearführung ausdrücklich verwiesen, und zwar kann insbesondere Bezug genommen werden auf die dortigen Fig. 2e, 3 und 4. Bei dieser bekannten Ausführungsform sind bevorzugt die lastübertragenden Wälzkörperreihen von zwei Kugelumläufen übereinander an dem einen Schenkel des Führungswagens angeordnet. Diese Wälzkörperreihen stehen dabei mit schienenseitigen Laufbahnen im Eingriff, die an den seitlichen Begrenzungsflanken einer in einer Seitenfläche der Führungsschiene angebrachten Profilausnehmung angeordnet sind. Die das Ausheben und Einsetzen hemmende Profilschicht ist dabei von der Materialschicht gebildet, die sich über die Eintauchtiefe der Kugeln zwischen der kopfflächennahen Laufbahn der Schiene und der Kopffläche erstreckt. Bei Anwendung des Erfindungsvorschlags auf eine solche bekannte Lösung ergibt sich, daß die lastübertragenden Wälzkörperreihen von zwei Wälzkörperumläufen an dem einen Schenkel übereinander angeordnet sind, und daß die Seitenfläche eine Profilausnehmung aufweist, welche zur Kopffläche hin durch die Profilschicht begrenzt ist, und daß die den beiden lastübertragenden Wälzkörperreihen zugehörigen lastaufnehmenden Laufbahnen der Führungsschiene in einer basisnahen und einer kopfflächennahen Begrenzungsflanke der Profilausnehmung ausgebildet sind.

Der Erfindungsvorschlag ist insbesondere dann anwendbar, wenn die Führungsmittel zwischen der Führungsschiene und dem Führungswagen insgesamt von Wälzkörperumläufen gebildet sind, also beispielsweise dann, wenn jeweils mindestens eine lastübertragende Wälzkörperreihe jeweils mindestens eines Wälzkörperumlaufs symmetrisch beiderseits einer zur Basisfläche senkrechten Längssymmetrieebene der Schiene angeordnet sind.

Grundsätzlich werden wesentliche Vorteile bereits dann erzielt, wenn an einem Schienenende die Profilschicht an nur einem Teil der Länge der jeweiligen tragenden Wälzkörperreihe ausgespart ist. Bevorzugt sieht man aber vor, daß die Profilschicht über einen Teilbereich der Schienenlänge ausgespart ist, dessen Länge mindestens der Länge eines Führungswagens entspricht.

In der Regel wird eine bestimmte Führungslänge des Führungswagens im Hinblick auf den Einsatzzweck gefordert. Der Länge dieses Führungswegs entsprechend wird die Länge der Führungsschiene gewählt. Bei Anwendung der Erfindung wird man die Länge der Führungsschiene um die Länge des auszusparenden Bereichs vergrößern und den ausgesparten Bereich dann an einem Schienenende vorsehen.

Wenn der Führungswagen mit Vorspannung auf die jeweils lastübertragende Wälzkörperreihe auf die Schiene aufgesetzt werden soll, so bieten sich je nach der gewählten Geometrie der Führungsschiene und des Führungswagens verschiedene Lösungen an. Eine vorteilhafte Lösung besteht darin, daß bei der Ausbildung einer lastaufnehmenden Laufbahn der Führungsschiene an der Profilschicht diese Laufbahn am Beginn des nichtausgesparten Bereichs eine Einlaufschräge für die jeweilige lastübertragende Wälzkörperreihe besitzt.

Wenn eine Grundkonfiguration angewendet wird, wie sie in Fig. 2e der DE-A-35 27 886 gewählt ist, so kann das Problem der Vorspannung auch dadurch angegangen werden, daß die Vorspannung in den basisnahen Wälzkörperreihen durch Druck auf den Führungswagen in Richtung senkrecht zur Basisfläche und zur Kopffläche erzeugt wird. Die basisnahen Wälzkörperreihen laufen dann unter Spreizung der Schenkel auf die zugehörigen schienenseitigen Laufbahnen auf. Anschließend braucht beim Einschieben des Führungswagens in den nicht ausgesparten Bereich nur noch diejenige Vorspannung erzeugt zu werden, die in den jeweils oberen Wälzkörperreihen gewünscht wird.

Die Erfindung läßt sich insbesondere auch dann anwenden, wenn mehrere Führungswagen auf eine Führungsschiene aufgebracht werden sollen oder mehrere Gruppen Führungswagen auf eine entsprechende Mehrzahl von Führungsschienen, also beispielsweise dann, wenn ein Werkzeugmaschinentisch durch mehrere Gruppen von miteinander fluchtenden Führungswagen auf mehreren, insbesondere zwei Führungsschienen zu führen ist.

Die beiliegenden Figuren erläutern die Erfindung schematisch anhand eines Ausführungsbeispiels. Es stellen dar:
- Fig. 1: eine erfindungsgemäße Linearführung;
- Fig. 2: eine Stirnansicht zu Fig. 1, teilweise geschnitten;
- Fig. 3: einen Schnitt durch die Führungsschiene;
- Fig. 4: eine Draufsicht auf einen mit erfindungsgemäßen Linearführungen geführten Werkzeugmaschinentisch;
- Fig. 5: das Schema eines weiteren Ausführungsbeispiels.

Im folgenden wird lediglich auf die für den Kern des Erfindungsgedankens wesentlichen Teile hingewiesen. Wegen weiterer Einzelheiten, die nicht Gegenstand der vorliegenden Erfindung sind, wird auf die DE-A-35 27 886 verwiesen.

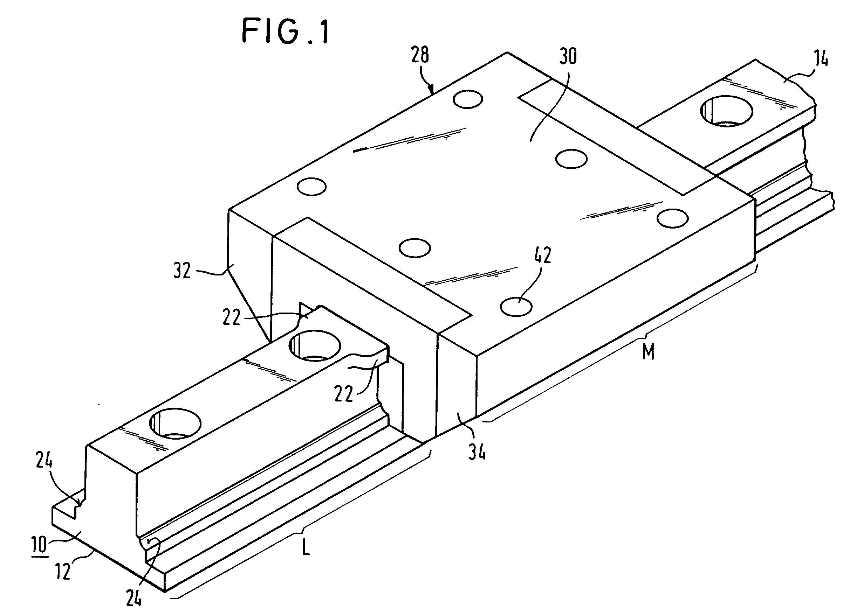

In Fig. 1. ist eine Führungsschiene ganz allgemein mit 10 bezeichnet. Sie umfaßt eine Basisfläche 12, eine Kopffläche 14 und Seitenfläche 16 und 18, welche insbesondere in Fig. 3 zu erkennen sind. In den Seitenflächen 16 und 18 sind jeweils Profilausnehmungen 20 vorgesehen, welche zur Basisfläche 12 hin durch eine Flanke 20a und zur Kopffläche 14 hin durch eine Flanke 20b begrenzt sind. Die Flanke 20b ist dabei an einer Profilschicht 22 ausgebildet, die sich zwischen der Begrenzungsflanke 20b und der Kopffläche 14 erstreckt. An der Begrenzungsflanke 20a ist eine lastaufnehmende Laufbahn 24 und an der Begrenzungsflanke 20b eine lastaufnehmende Laufbahn 26 jeweils in Form einer Laufrille ausgebildet. Der Führungswagen ist mit 28 bezeichnet. Er weist einen Steg 30 und zwei Schenkel 32,34 auf. An jedem der Schenkel 32,34 sind zwei Wälzkörperumläufe A und B angebracht, von denen jeder eine lastübertragende Kugelreihe A1 bzw. B1 besitzt, wobei die Kugelreihe A1 zum Eingriff mit der Laufbahn 26 und die Wälzkörperreihe B1 zum Eingriff mit der Laufbahn 24 bestimmt ist. Die lastübertragenden Wälzkörperreihen A1 und B1 sind an dem jeweiligen Schenkel 32 bzw. 34 durch Haltestege 36 gesichert.

Wie aus Fig. 1 ersichtlich, sind in einem Längsbereich L am Ende der Führungsschiene 10 die Profilschichten 22 ausgespart, so daß in diesem Längsbereich L, der vorzugsweise der Länge M des Führungswagens 28 entspricht, der Führungswagen 28 von oben auf die Führungsschiene 10 aufgesetzt werden kann. Beim Aufsetzen des Führungswagens 28 auf die Schiene 10 gelangen die unteren lastübertragenden Wälzkörperreihen B1 zwangsläufig auf die Laufbahnen 24, wobei sich eine etwa gewünschte Vorspannung in einer gewissen Spreizung der Schenkel 32 und 34 bemerkbar macht. Sind die lastübertragenden Wälzkörperreihen B1 einmal voll im Eingriff mit den schienenseitigen Laufbahnen 24, so kann der Führungswagen 28 aus dem Abschnitt L der Fig. 1 nach rechts verschoben werden in seine in Fig. 1 dargestellte Position. Dabei können am Beginn der Profilschichten 22 Einführungsschrägen ausgebildet sein, die das Einlaufen der lastübertragenden Kugelreihen A1 in die Laufbahnen 26 erleichtern.

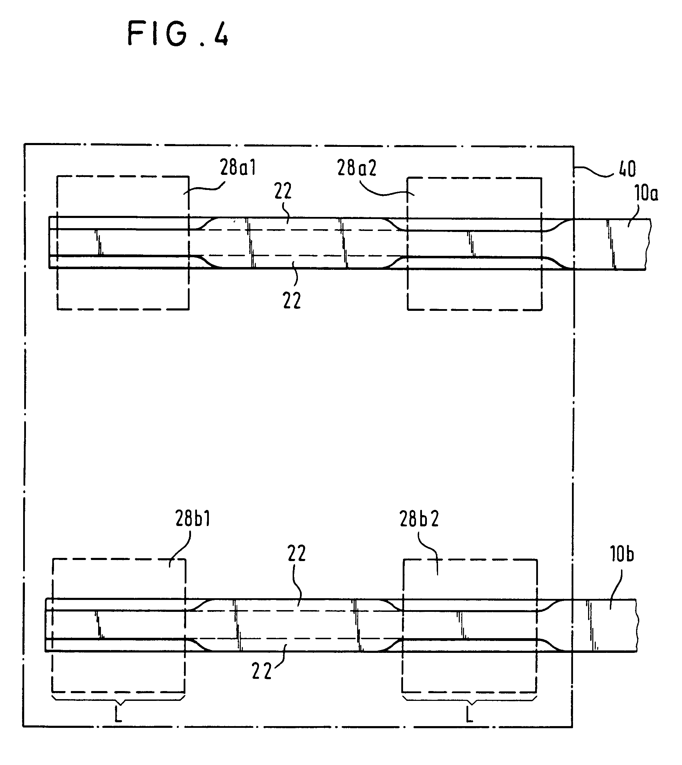

In Fig. 4 erkennt man einen Werkzeugmaschinentisch 40 auf zwei Führungsschienen 10a und 10b. Der Werkzeugmaschinentisch 40 ist mit Führungswagen 28a1 und 28a2 sowie 28b1 und 28b2 verbunden, insbesondere unter Verwendung der Befestigungsbohrungen 42 gemäß Fig. 1 verschraubt. Von den Führungsschienen 10a,10b weist jede zwei Längsbereiche L mit Aussparungen der Profilschicht 22 auf. Die Längsbereiche L sind entsprechend dem Abstand der Führungswagen 28a1,28a2,28b1,28b2 beabstandet, so daß der Werkzeugmaschinentisch 40 gleichzeitig auf beide Führungschienen 10a und 10 b abgesetzt werden kann.

Mit Hilfe der Anordnung gemäß Fig. 4 ist es möglich, komplette Führungstische rasch auszutauschen. Man kann beispielsweise während einer Bearbeitungszeit auf einer Werkzeugmaschine einen gerade nicht im Einsatz befindlichen Tisch mit einem weiteren Werkstück bestücken und nach Beendigung der Arbeiten an einem vorher zu bearbeitenden, auf einem anderen Tisch aufgespannten Werkstück die beiden Tische mit den Werkstücken austauschen. Der Austausch kann dabei natürlich auch mittels eines Krans erfolgen.

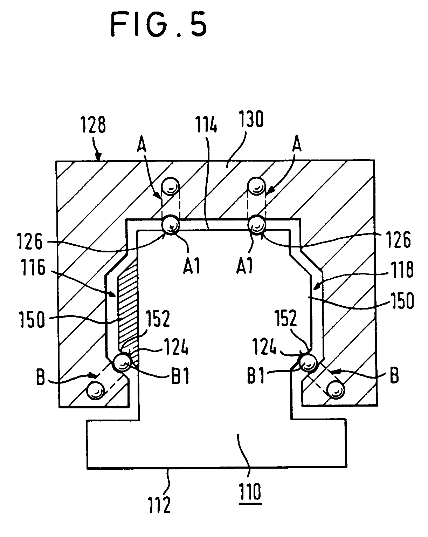

In Fig. 5 erkennt man eine weitere Ausführungsform. Analoge Teile sind mit gleichen Bezugszeichen versehen wie in den Fig. 1 - 4, jeweils vermehrtum die Zahl 100. In dieser Ausführungsform sind an den Seitenflächen 116,118 Profilrippen 150 angebracht, an deren unteren Begrenzungsflanken 152 die lastaufnehmenden Laufrillen 124 der Schiene 110 angeformt sind. Darüberhinaus ist der Führungswagen 128 durch weitere in dem Steg 130 untergebrachte Kugelumläufe A auf der Kopffläche 114 geführt. Man erkennt, daß man bei dieser Ausführungsform das Abnehmen und Aufsetzen des Führungswagens 128 dadurch verwirklichen kann, daß man wiederum über die Länge der lastübertragenden Kugelreihen B1 die Profilschichten 150 abträgt. Wenn dann der Führungswagen 128 mit den lastübertragenden Kugelreihen A1 in die Laufrillen 126 der Kopffläche 114 eingesetzt wird, so gelangen die lastübertragenden Kugelreihen B1 zwangsläufig in Flucht mit den Laufrillen 124 an den nicht ausgesparten Profilschichten 150.

## Patentansprüche

1. Linearführung umfassend eine Führungsschiene (10,110) mit einer Basisfläche (12,112), Seitenflächen (16,18; 116,118) und einer Kopffläche (14,114) und ferner umfassend einen Führungswagen (28,128) mit einem die Kopffläche (14,114) überquerenden Stegteil (30,130) und den Seitenflächen(16,18; 116,118) gegenüberstehenden Schenkeln (32,34) sowie Führungsmitteln zwischen dem Führungswagen (28,128) und der Führungsschiene (10,110), wobei diese Führungsmittel mindestens einen Wälzkörperumlauf (A,B) umfassen und eine lastübertragende Wälzkörperreihe (A1,B1) dieses Wälzkörperumlaufs (A,B) zwischen einer lastaufnehmenden Laufbahn eines Schenkels (32,34) und einer lastaufnehmenden Laufbahn (24,26;124,126) einer Seitenfläche (16,18; 116,118) angeordnet und an der lastaufnehmenden Laufbahn eines der Schenkel (32,34) gesichert ist, und wobei an dieser einen Seitenfläche (16,18; 116,118) zwischen der lastübertragenden Wälzkörperreihe (A1,B1) und der Kopffläche (14,114) eine die lastübertragende Wälzkörperreihe (A1,B1) übergreifende Profilschicht (22,150) der Führungsschiene (10,110) vorgesehen ist, welche ein Abheben des Führungswagens (28,128) von der Führungsschiene (10,110) verhindert, **dadurch gekennzeichnet,** daß auf einem Teilbereich (L) der Schienenlänge die Profilschicht (22,150) ausgespart ist derart, daß bei Überlappung des Führungswagens (28,128) mit diesem Teilbereich (L) der Führungswagen (28,128) von der Führungsschiene (10,110) abhebbar sowie auf die Führungsschiene (10,110) aufsetzbar ist, und daß die Führungsmittel derart ausgebildet sind, daß beim Aufsetzen des Führungswagens (28,128) die lastübertragende Wälzkörperreihe (A1,B1) in Achsflucht zu der lastaufnehmenden Laufbahn (24,26; 124,126) der Führungsschiene (10,110) tritt.

2. Linearführung nach Anspruch 1, dadurch gekennzeichnet, daß die lastaufnehmende Laufbahn (26;124) der Führungsschiene (10,110) an einer der Basisfläche (12;112) zugekehrten Begrenzungsflanke (20b,152) der Profilschicht (22,150) angeordnet ist.

3. Linearführung nach Anspruch 1 oder 2, dadurch gekennzeichnet, daß die lastübertragenden Wälzkörperreihen (A1,B1) von zwei Wälzkörperumläufen (A,B) an dem einen Schenkel (32,34) übereinander angeordnet sind, und daß die Seitenfläche (16,18) eine Profilausnehmung (20) aufweist, welche zur Kopffläche (14) hin durch eine Profilschicht (22) begrenzt ist, und daß die den beiden lastübertragenden Wälzkörperreihen (A1,B1) zugehörigen lastaufnehmenden Laufbahnen (24,26) der Führungsschiene (10) in einer basisnahen und einer kopfflächennahen Begrenzungsflanke (20a,20b) der Profilausnehmung (20) ausgebildet sind.

4. Linearführung nach einem der Ansprüche 1 - 3, dadurch gekennzeichnet, daß jeweils mindestens eine lastübertragende Wälzkörperreihe (A1,B1) jeweils mindestens eines Wälzkörperumlaufs (A,B) symmetrisch beiderseits einer zur Basisfläche (12,112) senkrechten Längssymmetrieebene der Schiene (10,110) angeordnet sind.

5. Linearführung nach einem der Ansprüche 1 - 4, dadurch gekennzeichnet, daß die Profilschicht (22) über einen Teilbereich (L) der Schienenlänge ausgespart ist, dessen Länge mindestens der Länge (M) des Führungswagens (28) entspricht.

6. Linearführung nach einem der Ansprüche 1 - 5, dadurch gekennzeichnet, daß die Aussparung nahe einem Schienenende vorgesehen ist.

7. Linearführung nach einem der Ansprüche 1 - 6, dadurch gekennzeichnet, daß bei der Ausbildung einer lastaufnehmenden Laufbahn (26,124) der Führungsschiene (10,110) an der Profilschicht (22,150) diese Laufbahn (26,124) am Beginn des nichtausgesparten Bereichs eine Einlaufschräge für die jeweilige lastübertragende Wälzkörperreihe (A1,B1) besitzt.

8. Linearführung nach einem der Ansprüche 1 - 7, dadurch gekennzeichnet, daß bei Zuordnung von mehreren, insbesondere zwei Führungswagen (28a1,28a2,28b1,28b2) zu einer Führungsschiene(10a,10b) die Profilschicht (22,150) der Führungsschiene (10a,10b) an mehreren entsprechend dem Abstand der Führungswagen (28a1,28a2,28b1,28b2) in Längsrichtung der Führungsschiene (10a,10b) beabstandeten Stellen ausgespart ist.

## Claims

1. Linear guide, comprising a guide rail (10, 110) having a base surface (12, 112), side faces (16, 18; 116, 118) and a top surface (14, 114), and furthermore comprising a guide carriage (28, 128) having a web part (30, 130) crossing over the top surface (14, 114) and flanges (32, 34) opposite the side faces (16, 18; 116, 118), and also guide means between the guide carriage (28, 128) and the guide rail (10, 110), wherein these guide means comprise at least one circuit of rolling elements (A, B), and a load-transmitting rolling element row (A1, B1) of this rolling element circuit (A, B) is disposed between a load-receiving track of one flange (32, 34) and a load-receiving track (24, 26; 124, 126) of one side face (16, 18; 116, 118) and is secured to the load-receiving track of one of the flanges (32, 34), and wherein, on this one side face (16, 18; 116, 118), a profiled layer (22, 150) of the guide rail (10, 110), engaging over the load-transmitting rolling element row (A1, B1) is provided between the load-transmitting rolling element row (A1, B1) and the top surface (14, 114), which (profiled layer) prevents lifting-off of the guide carriage (28, 128) from the guide rail (10, 110), characterized in that, on a partial region (L) of the rail length, the profiled layer (22, 150) is omitted or recessed in such a manner that, when the guide carriage (28, 128) overlaps this partial region (L), the guide carriage (28, 128) can be lifted off the guide rail (10, 110) and set down on the guide rail (10, 110), and that the guide means are so constructed that, when the guide carriage (28, 128) is set down, the load-transmitting rolling element row (A1, B1) comes into axial alignment with the load-receiving track (24, 26; 124, 126) of the guide rail (10, 110).

2. Linear guide according to Claim 1, characterized in that the load-receiving track (26; 124) of the guide rail (10, 110) is disposed on a boundary flank (20b, 152) of the profiled layer (22, 150) facing towards the base surface (12; 112).

3. Linear guide according to Claim 1 or 2, characterized in that the load-transmitting rolling element rows (A1, B1) of two rolling element circuits (A, B) are disposed above one another on the one flange (32, 34), and that the side face (16, 18) possesses a profile recess (20) which is bounded towards the top surface (14) by a profiled layer (22), and that the load-receiving tracks (24, 26) of the guide rail (10), associated with the two load-transmitting rolling element rows (A1, B1) are formed in a boundary flank (20a, 20b) of the profile recess (20) near the base and near the top surface respectively.

4. Linear guide according to one of Claims 1 to 3, characterized in that at least one load-transmitting rolling element row (A1, B1) of at least one rolling element circuit (A, B) is disposed symmetrically on either side of a longitudinal plane of symmetry of the rail (10, 110) perpendicular to the base surface (12, 112).

5. Linear guide according to one of Claims 1 to 4, characterized in that the profiled layer (22) is omitted or recessed over a partial region (L) of the rail length, the length of which is at least equal to the length (M) of the guide carriage (28).

6. Linear guide according to one of Claims 1 to 5, characterized in that the omission or recess is provided near one end of the rail.

7. Linear guide according to one of Claims 1 to 6, characterized in that, where a load-receiving track (26, 124) of the guide rail (10, 110) is formed on the profiled layer (22, 150), this track (26, 124) possesses, at the commencement of the non-recessed region, an oblique entrance zone for the respective load-transmitting rolling element row (A1, B1).

8. Linear guide according to one of Claims 1 to 7, characterized in that, where several, especially two, guide carriages (28a1, 28a2, 28b1, 28b2) are associated with a guide rail (10a, 10b), the profiled layer (22, 150) of the guide rail (10a, 10b) is omitted or recessed at several positions spaced apart corresponding to the spacing of the guide carriages (28a1, 28a2, 28b1, 28b2) in the longitudinal direction of the guide rail (10a, 10b).

## Revendications

1. Dispositif de guidage linéaire comportant un rail de guidage (10, 110) avec une surface de base (12, 112), des surfaces latérales (16, 18 ; 116, 118) et une surface de tête (14, 114) et comportant en outre un chariot de guidage (28, 128) avec une traverse (30, 130) chevauchant la surface de tête (14, 114) et des côtés (32, 34) faisant face aux surfaces latérales (16, 18 ; 116, 118) ainsi que des moyens de guidage entre le chariot de guidage (28, 128) et le rail de guidage (10, 110), dans lequel ces moyens de guidage comportent au moins une circulation de corps de roulement (A, B) et une rangée de corps de roulement (A1, B1) transmettant la charge de cette circulation de corps de roulement (A, B) est située entre une trajectoire absorbant la charge d'un côté (32, 34) et une trajectoire (24, 26 ; 124, 126) absorbant la charge d'une surface latérale (16, 18 ; 116, 118) et est bloquée contre la trajectoire absorbant la charge de l'un des côtés (32, 34), et dans lequel sur l'une de ces surfaces latérales (16, 18 ; 116, 118), entre la rangée de corps de roulement (A1, B1) transmettant la charge et la surface de tête (14, 114), il est prévu une couche profilée (22, 150), passant sur la rangée de corps de roulement (A1, B1) transmettant la charge, du rail de guidage (10, 110), laquelle couche empêche que le chariot de guidage (28, 128) ne se soulève du rail de guidage (10, 110), caractérisé en ce que sur une zone partielle (L) de la longueur du rail, la couche profilée (22, 150) est découpée de manière qu'en cas de recouvrement du chariot de guidage (20, 128) par cette zone partielle (L), le chariot de guidage (28, 128) peut être soulevé du rail de guidage (10, 110) et mis en place sur le rail de guidage (10, 110), et en ce que les moyens de guidage sont conçus de telle sorte que lors de la mise en place du chariot de guidage (28, 128), la rangée de corps de roulement (A1, B1) transmettant la charge vient s'aligner dans l'axe de la trajectoire (24, 26, 124, 126), absorbant la charge, du rail de guidage (10, 110).

2. Dispositif de guidage linéaire selon la revendication 1, caractérisé en ce que la trajectoire (26 ; 124) absorbant la charge du rail de guidage (10, 110) est placée sur un flanc de délimitation (20b, 152), tourné vers la surface de base (12 ; 112), de la couche profilée (22, 150).

3. Dispositif de guidage linéaire selon la revendication 1 ou 2, caractérisé en ce que les rangées de corps de roulement (A1, B1), transmettent la charge, de deux circulations de corps de roulement (A, B) sont superposées sur l'un des côtés (32, 34) et en ce que la surface latérale (16, 18) présente un évidement profilé (20) qui est limité vers la surface de tête (14) par une couche profilée (22), et en ce que les trajectoires (24, 26) du rail de guidage (10), absorbant la charge, faisant partie des deux rangées de corps de roulement (A1, B1) transmettant la charge, sont formées dans un flanc de délimitation (20a) proche de la base et dans un flanc de délimitation (20b) proche de la surface de tête de l'évidement profilé (20).

4. Dispositif de guidage linéaire selon l'une des revendications 1 à 3, caractérisé en ce qu'au moins une rangée de corps de roulement (A1, B1) transmettant la charge d'au moins une circulation de corps de roulement (A, B) est située symétriquement de part et d'autre d'un plan de symétrie longitudinal, perpendiculaire à la surface de base (12, 112), du rail (10, 110).

5. Dispositif de guidage linéaire selon l'une des revendications 1 à 4, caractérisé en ce que la couche profilée (22) est découpée sur une zone partielle (L) de la longueur du rail, dont la longueur correspond au moins à la longueur (M) du chariot de guidage (28).

6. Dispositif de guidage linéaire selon l'une des revendications 1 à 5, caractérisé en ce que la découpe est prévue à proximité d'une extrémité du rail.

7. Dispositif de guidage linéaire selon l'une des revendications 1 à 6, caractérisé en ce que pour former une trajectoire (26, 124), absorbant la charge, du rail de guidage (10, 110) sur la couche profilée (22, 150), cette trajectoire (26, 124) possède, au début de la zone non découpée, une surface oblique d'entrée pour la rangée de corps de roulement (A1, B1) transmettant la charge respective.

8. Dispositif de guidage linéaire selon l'une des revendications 1 à 7, caractérisé en ce que dans le cas où plusieurs, en particulier deux chariots de guidage (28a1, 28a1, 28b1, 28b2), sont affectés à un rail de guidage (10a, 10b), la couche profilée (22, 150) du rail de guidage (10a, 10b) est découpée en plusieurs points espacés dans la direction longitudinale du rail de guidage (10a, 10b), suivant la distance séparant les chariots de guidage (28a1, 28a2, 28b1, 28b2).
